(19) Europäisches Patentamt / European Patent Office / Office européen des brevets

(11) **EP 2 569 132 B1**

(12) **EUROPEAN PATENT SPECIFICATION**

(45) Date of publication and mention of the grant of the patent:
**22.10.2014 Bulletin 2014/43**

(21) Application number: **11718395.4**

(22) Date of filing: **09.05.2011**

(51) Int Cl.:
*B27G 11/00* (2006.01)   *B27D 1/04* (2006.01)
*B27M 3/00* (2006.01)   *E04C 3/14* (2006.01)
*B32B 37/12* (2006.01)   *B32B 41/00* (2006.01)
*E04C 3/12* (2006.01)

(86) International application number:
**PCT/EP2011/057375**

(87) International publication number:
**WO 2011/141401 (17.11.2011 Gazette 2011/46)**

(54) **METHOD OF MANUFACTURING A COMPOSITE PRODUCT**

VERFAHREN ZUR HERSTELLUNG EINES VERBUNDPRODUKTS

PROCÉDÉ DE FABRICATION D'UN PRODUIT COMPOSITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2010 US 333839 P**
**12.05.2010 EP 10162635**

(43) Date of publication of application:
**20.03.2013 Bulletin 2013/12**

(73) Proprietor: **Akzo Nobel Coatings International B.V.**
**6824 BM Arnhem (NL)**

(72) Inventors:
• **OLSSON, Lars Johan Philip**
  **S-135 50 Tyresö (SE)**
• **RICCIUS, Henrik Arne Jonas**
  **S-133 34 Saltsjöbaden (SE)**
• **FÄLDT, Sara Kristina**
  **S-138 35 Älta (SE)**

(74) Representative: **Akzo Nobel IP Department**
**Velperweg 76**
**6824 BM Arnhem (NL)**

(56) References cited:
WO-A1-01/49489   WO-A1-03/058532
US-A- 3 582 428   US-A- 5 665 197
US-A1- 2002 189 754   US-A1- 2003 079 832

**Description**

The invention relates to a method of manufacturing a composite product, wherein a plurality of elements are assembled by gluing them together under pressure, the method comprising applying glue to at least one surface of each element on which glue is to be applied,, assembling the elements to a desired structure and subjecting the assembled elements to pressure in a press, which method further comprising controlling the amount of at least one component of the glue applied. The invention also relates to apparatus for applying glue, a computer program product and a computer readable medium.

For the manufacture of products comprising a plurality of elements that are assembled by gluing, sometimes large amounts of glue are applied to large surfaces. In cases where several elements exhibiting such large surfaces are to be assembled one after the other, for example at production of laminated wooden beams, substantial waiting times may occur before the assembly of elements can be finally processed, e.g. in a press where the curing of the glue takes place. In such instances, the first element to which glue was applied will have to wait longer than the last element. The longer the waiting time, the more glue is applied to avoid defective gluing.

In order to minimise the consumption of glue, WO 2001/049489 discloses a method of controlling the gluing so the amount of at least one component of the glue, applied at a specific point of glue application on an element, is a function of the waiting time it takes before the point of glue application is subjected to the pressure in the press. This method can be operated automatically by means of a computer.

US 3582428 discloses a method of making plywood comprising spreading with glue selected surfaces of a sequence of wood veneers and adjusting the amount of glue spread on the veneers progressively to alter the amount of glue applied to successive veneers and thereby provide optimum glue spreads for all assemblies as determined by their assembly times.

However, if unexpected delays occur in a production line, there is a risk that the waiting time for the elements of a batch on which glue already have been applied will be too long and the gluing thus defective. As defective gluing means both loss of production and waste of material it has been found advisable to keep a reasonable safety margin and apply more glue than in the ideal case would be necessary. On the other hand, in cases there are no unexpected delays, this practice leads to use of more glue than necessary.

It has now been realised that the probability for unforeseen delays in the production line is decreased for each element in a batch onto which glue is applied. According to the present invention it has thus been found possible to further decrease the consumption of glue, without putting the quality in danger, by lowering the safety margin for each element in a batch.

A first aspect of the invention thus concerns a method of manufacturing a composite product, wherein a batch of a plurality of elements are assembled by gluing them together under pressure, the method comprising applying glue to at least one surface of each element on which glue is to be applied when passing a glue applicator one by one or in groups of two or more elements, assembling the elements to a desired structure and subjecting the assembled elements to pressure in a press, the method further comprising controlling the amount of at least one component of the glue applied on an element, wherein controlling and applying the amount of glue comprises:

a. determining the number N of elements or groups of elements that simultaneously will pass the glue applicator in the batch, the assembly time $t_{CA1}$ for the first element or group of elements in the batch passing the glue applicator and the assembly time $t_{CAN}$ for the last element or group of elements in the batch passing the glue applicator, wherein $t_{CA1}$ is the shortest possible assembly time for the first element or group of elements plus a safety margin $S_1$ and $t_{CAN}$ is the shortest possible assembly time for the last element or group of elements, optionally plus a safety margin $S_N$ that is less than $S_1$;

b. if glue is to be applied on the first element or at least one element of the first group elements, calculating the amount of at least one component of the glue for the first element or at least one element of said first group based on $t_{CA1}$ and applying that amount on at least one surface of said first element or said at least one element of said first group;

c. for each following element or group i of elements simultaneously passing the glue applicator, where i goes from 2 to N-1:

(i) calculating the assembly time by the formula

$$t_{CAi} = t_{CA1} - (t_{CA1} - t_{CAN})i/N;$$

and,
(ii) if glue is to be applied to the element or at least one element of the group of elements i, calculating the amount of at least one component of the glue for said element or at least one element of said group i based on $t_{CAi}$ and applying that amount on at least one surface of said element or said at least one element of said group i; and,

d. if glue is to be applied on the last element or at least one element of the last group of elements simultaneously passing the glue applicator, calculating the amount of at least one component of the glue for the last element or at least one element of said last group based on $t_{CAN}$ and applying that amount on at least one surface of said last element or said at least one element of said last group.

Another aspect of the invention concerns an apparatus for applying glue to elements for manufacturing of a composite product, said apparatus comprising a glue applicator, a conveyor for passing elements or groups of elements through the glue applicator, means for counting the number of elements or groups of elements passing through the glue applicator, a control unit programmed to control the amount of at least one component of glue applied by the glue applicator by the method according to the first aspect of the invention.

A further aspect of the invention concerns a computer program product that when executed on a computer, controls the amount of at least one component of the glue applied to elements being assembled by gluing them together under pressure by the method according to the first aspect of the invention.

Still a further aspect of the invention concerns a computer readable medium comprising instructions for bringing a computer to control the amount of at least one component of the glue applied to elements being assembled by gluing them together under pressure by the method according to the first aspect of the invention.

The invention is applicable for the manufacturing of a variety of composite products from different kind of materials like metal, polymers, ceramics and wood, but is particularly advantageous when the composite product is a wooden product and the elements are pieces of wood, and particularly if the composite product is a layered product made by gluing lamellas or veneers together, for example laminated beams, plywood, edge glued panels (EGP), cross laminated timber (CLT) and laminated veneer lumber (LVL).

The term batch of elements as used herein refers to all elements that simultaneously are subjected to pressure in the same press. The batch may include one or more composite products, such as laminated beams, depending on the size of the products and the size of the press. The number of composite products in a batch may, for example, be from 1 to about 500.

It is usually sufficient to apply glue to one of two surfaces to be joined, which means that for each composite product made there will in most cases be one element, normally the first or the last one, on which glue is not to be applied. When more than one composite product is made in a batch, there may then be several elements on which glue is not to be applied. Which ones of the elements in a batch on which glue is not to be applied, is preferably determined beforehand, for example in the daily production planning.

The number of elements in a batch depends on the press and on the kind of composite product manufactured and may, for example, be from 2 to 1000 or more, or from 5 to 300. For laminated beams, the number of elements is preferably from 2 to 200 or from 3 to 100. For plywood, the number of elements is preferably from 2 to 1000 or from 5 to 300.

The assembly time $t_{CAi}$ for a specific element or group i of elements in a batch, refers to the time it takes from the point when the first glue is applied to the element till all parts of the entire element or group of elements is subjected to pressure in the press. In some cases, for example when making curved beams, it may take a significant amount of time from the closure of the press till the entire element is subjected to pressure.

In a production line in which all elements pass the glue applicator one by one, the number N will be the same as the number of elements in the batch. In some production lines groups of two, three, four or even more elements simultaneously pass the glue applicator in parallel and those elements will consequently have the same assembly time $t_{CAi}$. If, for example, the number of elements in a batch is 100 and each one of them pass the glue applicator in groups of two elements, the number N will be 50 and each element in the same group i will have the same assembly time $t_{CAi}$.

The assembly time $t_{CA1}$ is the sum of the shortest possible assembly time for the first element or group of elements in the batch and a safety margin. The shortest possible assembly time depends on the number of elements or group of elements, the kind and size of the elements, the kind of glue and the specific production line, for example the maximum speed of operation in respect of transporting the elements, applying the glue, time between lamellas etc. The shortest possible assembly time for an element or group of elements in a specific composite product manufactured in a specific production line can easily be determined by a person skilled in the art, manually or by setting up a formula containing feeding speed, number of elements or groups of elements, length of the elements, time between the elements, time to close the press etc. The safety margin $S_1$ is determined by experience with the specific production line and product to be manufactured. In many cases the shortest possible assembly time for the first element may, for example, be from about 1 to about 1000 minutes or from about 5 to about 400 minutes. A suitable safety margin may, for example, be from about 1 to about 100 minutes or from about 2 to about 60 minutes. In such cases, the assembly time $t_{CA1}$ is given by adding the shortest possible assembly time for the first element or group of elements and the safety margin $S_1$ and may, for example, be from about 2 to about 1100 minutes or from about 4 to about 500 minutes.

The assembly time $t_{CAN}$ is the shortest possible assembly time for the last element or group of elements and optionally a safety margin. The shortest possible assembly time is determined as for the first element or group of elements based on the specific production line, kind of element etc. As the likelihood for unexpected delays of the last element or group of elements is very low it is in most cases advantageous not to apply any safety margin $S_N$ at all or to only apply a very short safety margin that in any event is shorter than the safety margin $S_1$ for the first element. In many cases, the assembly time $t_{CAN}$ may, for example, be from about 1 to about 350 minutes or from about 2 to about 200 minutes.

The assembly time $t_{CAi}$ for the second and each following element or group of elements up to the second last element or group of elements, N-1, is calculated based on $t_{CA1}$, $t_{CAN}$, i and N. Thus, the calculated assembly time for each one of the elements or groups of elements 2 to N-1 is based on the number of the element or groups of elements and it is not necessary to take the time passed into account.

The amount of at least one component of the glue is calculated based on the assembly time $t_{CAi}$ for each specific element or group of elements. If it is a one component glue or a two component glue with a fixed ratio between the components, the amount of glue is decreased with the assembly time. If the glue comprises two or more components, usually at least one resin and at least one hardener, a lower ratio resin to hardener gives a slower system. With decreasing assembly time it is then possible to increase the amount of hardener compared to the amount of resin as an alternative or a complement to decreasing the total amount of glue. The exact amount of glue and/or ratio resin to hardener at a certain assembly time depends primarily on the kind of glue and can easily be determined experimentally by a person skilled in art for the conditions in each case. The data may be stored in a computer used for the control procedure in the gluing. Although not necessary, it is possible to also take account of other parameters, like the temperature of the elements, the humidity etc. The temperature of the elements may be measured or estimated, for example based on measurement of the temperature of one or a few elements in the batch to be assembled, the ambient temperature where the elements are stored or measurement of the temperatures of the elements in a previous batch. In an embodiment, the temperature and/or one or more other parameter is measured for each element and used for calculating the amount of at least one component of the glue applied to that element. However, unless there are significant variations in the temperature of the elements, it is also possible to use the same value for calculating the amount of glue for all elements in a batch. In many cases a suitable amount of glue may, for example, be from about 50 to about 1000 $g/m^2$ or from about 100 to about 500 $g/m^2$.

Applying the above method combines a very low consumption of glue with a very low risk for defective gluing. If there is a stop in the production line, the count of elements is stopped simultaneously, and when the production is taken up again, the glue amount is same as before the stop. If there is no stop in the production line, the amount of glue for the last element in a batch will still be at the desired low level. If the safety margin would be decreased based on time only, and there would be no stop in the production line, the glue amount for the last element would be unnecessarily high, unless the safety margin would be set to such a low level that the risk for defective gluing would increase.

In a possible mode of operation a computer such as a PLC (Programmable Logical Controller) gets the information regarding the number of elements or groups of elements in a batch that will pass the glue applicator (e.g. N = 60), the assembly time for the first element or groups of elements in the batch (e.g. $t_{CA1}$ = 45 min) and the assembly time for the last element or group of elements in the batch (e.g. $t_{CAN}$ = 5 min) from a human operator or via communication from a supervisory control system. The PLC will then automatically calculate the necessary amount of at least one component of the glue to meet the required assembly time for the first element based the properties of the glue system used and optionally other important parameters such as the actual temperature of the element. The necessary amount of glue varies considerably depending on the glue system, but can easily be determined experimentally by a person skilled in the art for a specific glue system at various assembly times and optionally other conditions and be transformed to a formula for that specific glue system, which formula can be used by the PLC for the calculations. When the first element or group of elements has passed, the assembly time is adjusted considering that one element out of the 60 has passed. The same adjustment is done after each one of the passing elements or groups of elements. As a result of this way of adjusting the assembly time it will end up using the real required assembly time for the last element or group of elements, in this example 5 minutes.

The formula for calculating the assembly time for a specific element or group i of elements is:

$$t_{CAi} = t_{CA1} - (t_{CA1} - t_{CAN})i/N$$

Thus, if for example N = 60, $t_{CA1}$ = 45 min and $t_{CAN}$ = 5 min, then $t_{CA30}$ = 25 min.

Any kind of glue suitable for the material of the elements can be used and include one and two component adhesive systems. Examples of adhesive systems suitable for wooden materials include PRF (phenol resorcinol formaldehyde) or RF (resorcinol formaldehyde) together with a formaldehyde based hardener, amino resins like UF (urea formaldehyde), MF (melamine formaldehyde) and MUF (Melamine Urea Formaldehyde) together with an acidic hardener, PUR (Poly urethane), EPI (emulsion polymer isocyanate), polymer dispersion based adhesives such as those comprising homo- or copolymers of vinylacetate, and/or other monomers, protein based adhesives and starch based adhesives. In the case of two component adhesive systems like amino resin systems, the resin and the hardener component can be applied separately to the elements or be mixed before application. A more detailed description of suitable adhesive systems can be found in the literature, for example in EP 501174, WO 93124582, WO 99/67028, WO 2001/070898, WO 2009/005461, WO 02/068178, WO 99/048991, WO 2011/009811 and WO 2011/009812.

If a glue comprising at least two components, such as resin and a hardener, the relation between the components may be determined as described in WO 2011/141402.

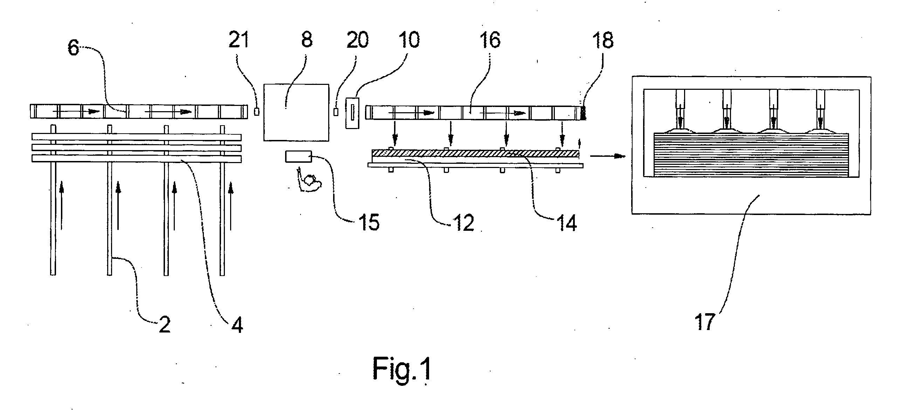

An embodiment of the invention will now be described with reference to Fig.1 schematically showing the manufacture of a laminated beam consisting of a stack of individual lamellas glued and pressed together to form the beam. However, the principle is usable for all kinds of products that are glued together and subjected to pressure for hardening the glue.

The manufacturing station comprises a supply unit 2 for individual lamellas 4. The supply unit can be any kind of transport device that is able to position one or more lamellas at a time on a conveyor belt 6 or the like, used for feeding the lamellas into the processing portion of the manufacturing station. The supply unit could even be an operator, manually placing each individual lamella on said conveyor.

The processing portion shown comprises five units: a planer device 8 (optional); a glue applicator 10; a stacking unit 12 (optional) where a "precursor beam" 14 is assembled; a control unit 15 (e.g. a PLC or other processor device) and operating panel; and a press 17.

The control unit 15 is supplied with data for the specific product to be manufactured, either by an operator or in digital form from a central computer or by data on any kind of data carrier.

In operation the following procedure takes place: A first lamella 4 is placed on the conveyor or feeder 6, fed into the planer device 8, where the lamella is suitably surface machined, if it is not already planed. This unit comprises guide rolls and machining tools, and therefore it can also be used for controlling the speed of the lamella through the station. However, the planer device can be dispensed with if the raw material is of high quality and does not need to be treated, and if the speed of the lamellas can be controlled by the conveyor 6, or by the glue applicator 10.

After having (optionally) been surface machined, the lamella 4 is fed through the glue applicator 10 that, for example, may be of a string type, a curtain type or any other commonly used type of applicator. The glue amount that is applied to the lamella is controlled in a way to be described below, and will vary from lamella to lamella automatically according to the control program, adapted for each individual product type, glue system and environmental conditions prevailing in the plant.

A sensor 20 for counting the number of lamellas passing the glue applicator 10 provides data to the control unit 15 as a basis for calculating the amount of glue to be applied on each lamella. One or more sensors 21 may also be arranged for measuring the temperature, moisture content and or other parameters for each lamella and provide the data to the control unit as a basis for calculating the amount of glue to be applied.

It is to be understood that the manufacturing station also may be operated so two or more lamellas are placed on the conveyer in parallel and consequently pass the glue applicator 10 simultaneously, in groups. The sensor 20 will then count each time a group of lamellas simultaneously pass the glue applicator 10.

The amount of glue to be applied to each lamella can be controlled in several ways, for example by controlling the flow of glue, controlling the surface covered by the glue applicator, controlling the speed of a lamella through the glue applicator or any combination thereof.

After having been provided with the appropriate amount of glue, the lamella 4 exiting from the glue applicator 10 will be moved forwards by a second conveyor 16 to a stop 18. Then the lamellas will be moved from the conveyor 16 to the side where they are placed on top of each other until the desired number of lamellas have been assembled to a pile or stack. The assembly is then transported to a press where the pile is subjected to a suitable pressure, and if required to heat, for a sufficient period of time to harden the glue.

There are several possible types of presses usable for the manufacture of laminated products. For example, a full length press will exert a pressure over the entire assembly of glued lamellas at one and the same time, and thus all parts will be pressed simultaneously, therefore the pressing operation itself will not cause any additional waiting times to be considered in the glue application. On the other hand, a section press will press only part of the assembly in a first pressing operation, and then continue along the length of the assembly in several operations, that may or may not be overlapping. In this case the last section to be pressed has to wait additional time, and thus the amount of glue to be applied to various parts of each lamella may be calculated in accordance therewith. A further alternative is a continuously working press, i.e. the pressure is applied by means of rollers acting on the upper surface of the pile or stack of lamellas. The assembly is then fed continuously through the press and the amount of glue applied to the different parts of each lamella may be calculated based on varying waiting time over the length of the lamellas.

**Claims**

1. A method of manufacturing a composite product, wherein a batch of a plurality of elements are assembled by gluing them together under pressure, the method comprising applying glue to at least one surface of each element on which glue is to be applied when passing a glue applicator one by one or in groups of two or more elements, assembling the elements to a desired structure and subjecting the assembled elements to pressure in a press, the method further comprising controlling the amount of at least one component of the glue applied on an element, **characterised in that** controlling and applying the amount of glue comprises:

a. determining the number N of elements or groups of elements that simultaneously will pass the glue applicator in the batch, the assembly time $t_{CA1}$ for the first element or group of elements in the batch passing the glue applicator and the assembly time $t_{CAN}$ for the last element or group of elements in the batch passing the glue applicator, wherein $t_{CA1}$ is the shortest possible assembly time for the first element or group of elements plus a safety margin $S_1$ and $t_{CAN}$ is the shortest possible assembly time for the last element or group of elements, optionally plus a safety margin $S_N$ that is less than $S_1$;

b. if glue is to be applied on the first element or at least one element of the first group of elements, calculating the amount of at least one component of the glue for the first element or at least one element of said first group based on $t_{CA1}$ and applying that amount on at least one surface of said first element or said at least one element of said first group;

c. for each following element i or group i of elements simultaneously passing the glue applicator, where i goes from 2 to N-1:

(i) calculating the assembly time $t_{CAi}$ by the formula

$$t_{CAi} = t_{CA1} - (t_{CA1} - t_{CAN})i/N;$$

and,

(ii) if glue is to be applied to the element or at least one element of the group of elements i, calculating the amount of at least one component of the glue for said element or at least one element of said group i based on $t_{CAi}$ and applying that amount on at least one surface of said element or said at least one element of said group i; and,

d. if glue is to be applied on the last element or at least one element of the last group of elements simultaneously passing the glue applicator, calculating the amount of at least one component of the glue for the last element or at least one element of said last group based on $t_{CAN}$ and applying that amount on at least one surface of said last element or said at least one element of said last group.

2. The method as claimed in claim 1, wherein the composite product is a wooden layered product.

3. The method as claimed in claim 2, wherein the wooden layered product is a laminated beam.

4. The method as claimed in claim 2, wherein the wooden layered product is plywood.

5. The method as claimed in any one of the claims 1-4, wherein the number of elements in the batch is from 2 to 1000.

6. The method as claimed in claim 5, wherein the number of elements in a batch is from 5 to 300.

7. The method as claimed in any one of the claims 1-6, wherein $t_{CA1}$ is from about 2 to about 1100 minutes.

8. The method as claimed in any one of the claims 1-7, wherein $t_{CAN}$ is from about 1 to about 350 minutes.

9. The method as claimed in any one of the claims 1-8, wherein the glue applied is an amino resin with an acidic hardener.

10. The method as claimed in any one of the claims 1-9, wherein all elements pass the glue applicator one by one.

11. The method as claimed in any one of the claims 1-9, wherein groups of two or more elements simultaneously pass the glue applicator.

12. An apparatus for manufacturing of a composite product, said apparatus comprising a glue applicator, a conveyor for passing elements or groups of elements through the glue applicator, means for counting the number of elements or groups of elements passing through the glue applicator, a control unit programmed to control the amount of at least one component of glue applied by the glue applicator by the method according to any one of the claims 1-11.

13. A computer program product that when executed on a computer, controls the amount of at least one component of glue applied to elements being assembled by gluing them together under pressure according to any one of the claims 1-11.

14. A computer readable medium comprising instructions for bringing a computer to control the amount of at least one component of glue applied to elements being assembled by gluing them together under pressure according to any one of the claims 1-11.

**Patentansprüche**

1. Verfahren zur Herstellung eines Verbundproduktes, wobei eine Charge einer Vielzahl von Elementen zusammengefügt wird, indem man sie unter Druck zusammenklebt, wobei das Verfahren folgendes aufweist: Auftragen von Klebstoff auf mindestens eine Oberfläche eines jeden Elementes, auf die Klebstoff aufzutragen ist, wenn es eine Klebepistole nacheinander oder in Gruppen von zwei oder mehr Elementen passiert, Zusammenfügen der Elemente zu einer gewünschten Konstruktion und Unterziehen der montierten Elemente einem Druck in einer Presse, wobei das Verfahren weiterhin folgendes aufweist: Steuern der Menge von mindestens einer Komponente des auf ein Element aufgetragenen Klebstoffes, **dadurch gekennzeichnet, dass** das Steuern und Auftragen der Klebstoffmenge folgendes aufweist:

a. Festlegen der Zahl N von Elementen oder Gruppen von Elementen, die die Klebepistole in der Charge gleichzeitig passieren, der Montagezeit $t_{CA1}$ für das erste Element oder die Gruppe von Elementen in der Charge, die die Klebepistole passiert, und der Montagezeit $t_{CAN}$ für das letzte Element oder die Gruppe von Elementen in der Charge, die die Klebepistole passiert, wobei $t_{CA1}$ die kürzestmögliche Montagezeit für das erste Element oder die Gruppe von Elementen, plus eine Sicherheitsmarge $S_1$, und $t_{CAN}$ die kürzestmögliche Montagezeit für das letzte Element oder die Gruppe von Elementen, wahlweise plus eine Sicherheitsmarge $S_N$, ist, die weniger als $S_1$ ist;

b. wenn Klebstoff auf das erste Element oder mindestens ein Element der ersten Gruppe von Elementen aufzutragen ist, Berechnen der Menge von mindestens einer Komponente des Klebstoffs für das erste Element oder mindestens ein Element der ersten Gruppe, basierend auf $t_{CA1}$, und Auftragen dieser Menge auf mindestens eine Oberfläche des ersten Elementes oder mindestens ein Element der ersten Gruppe;

c. für jedes folgende Element i oder jede Gruppe i von Elementen, die die Klebepistole gleichzeitig passieren, wobei i von 2 bis N-1 geht:

(i) Berechnen der Montagezeit $t_{CAi}$ mit der Formel:

$$t_{Cai} = t_{CA1} - (t_{CAi} - t_{CAN})i/N;$$

und

(ii) wenn Klebstoff auf das Element oder mindestens ein Element der Gruppe von Elementen i aufgetragen werden soll, Berechnen der Menge von mindestens einer Komponente des Klebstoffs für das Element oder mindestens ein Element der Gruppe i, basierend auf $t_{CAi}$, und Auftragen dieser Menge auf mindestens eine Oberfläche des Elementes oder mindestens ein Element der Gruppe i; und

d. wenn Klebstoff auf das letzte Element oder mindestens ein Element der letzten Gruppe von Elementen aufgetragen werden soll, die die Klebepistole gleichzeitig passieren, Berechnen der Menge von mindestens einer Komponente des Klebstoffs für das letzte Element oder mindestens ein Element der letzten Gruppe, basierend auf $t_{CAN}$, und Auftragen dieser Menge auf mindestens eine Oberfläche des letzten Elements oder mindestens ein Element der letzten Gruppe.

**2.** Verfahren nach Anspruch 1, wobei das Verbundprodukt ein geschichtetes Holzprodukt ist.

**3.** Verfahren nach Anspruch 2, wobei das geschichtete Holzprodukt ein Verbundträger ist.

**4.** Verfahren nach Anspruch 2, wobei das geschichtete Holzprodukt Sperrholz ist.

**5.** Verfahren nach einem der Ansprüche 1-4, wobei die Anzahl von Elementen in der Charge von 2 bis 1000 beträgt.

**6.** Verfahren nach Anspruch 5, wobei die Anzahl von Elementen in einer Charge von 5 bis 300 beträgt.

**7.** Verfahren nach einem der Ansprüche 1-6, wobei $t_{CA1}$ von ca. 2 bis ca. 1100 Minuten dauert.

**8.** Verfahren nach einem der Ansprüche 1-7, wobei $t_{CAN}$ von ca. 1 bis ca. 350 Minuten dauert.

**9.** Verfahren nach einem der Ansprüche 1-8, wobei der aufgetragene Klebstoff ein Aminoharz mit einem sauren Härtemittel ist.

**10.** Verfahren nach einem der Ansprüche 1-9, wobei alle Elemente nacheinander die Klebepistole passieren.

**11.** Verfahren nach einem der Ansprüche 1-9, wobei Gruppen von zwei oder mehr Elementen die Klebepistole gleichzeitig passieren.

**12.** Vorrichtung zur Herstellung eines Verbundproduktes, wobei die Vorrichtung folgendes aufweist: eine Klebepistole, ein Förderband zum Passieren der Elemente oder Gruppen von Elementen durch die Klebepistole, Einrichtungen zum Zählen der Anzahl von Elementen oder Gruppen von Elementen, die die Klebepistole passieren, eine Steu-ereinheit, die programmiert ist, um die Menge von mindestens einer Komponente des von der Klebepistole durch das Verfahren nach einem der Ansprüche 1-11 aufgetragenen Klebstoffs zu steuern.

13. Computerprogramm-Produkt, das bei Ausführen auf einem Computer die Menge von mindestens eine Klebstoffkomponente steuert, die auf Elemente aufgetragen wird, die zusammengefügt werden, indem man sie unter Druck nach einem der Ansprüche 1-11 zusammenklebt.

14. Computerlesbarer Datenträger mit Anweisungen, um einen Computer dazu zu bringen, die Menge von mindestens einer Klebstoffkomponente zu steuern, die auf Elemente aufgetragen wird, die zusammengefügt werden, indem man sie unter Druck nach einem der Ansprüche 1-11 zusammenklebt.

**Revendications**

1. Procédé de fabrication d'un produit composite, dans lequel un lot d'une pluralité d'éléments sont assemblés en les collant les uns aux autres sous pression, le procédé comprenant le fait d'appliquer une colle sur au moins une surface de chaque élément sur lequel la colle doit être appliquée lorsqu'il passe par un applicateur de colle un par un ou en groupes de deux ou plusieurs éléments, d'assembler les éléments selon une structure souhaitée et de soumettre les éléments assemblés à une pression dans une presse, le procédé comprenant en outre le fait de réguler la quantité d'au moins un composant de la colle appliquée sur un élément, **caractérisé en ce que** le fait de réguler et d'appliquer la quantité de colle comprend les étapes qui consistent :

   a. à déterminer le nombre N d'éléments ou de groupes d'éléments qui vont passer simultanément par l'applicateur de colle dans le lot, le temps d'assemblage $t_{CA1}$ pour le premier élément ou groupe d'éléments dans le lot passant par l'applicateur de colle et le temps d'assemblage $t_{CAN}$ pour le dernier élément ou groupe d'éléments dans le lot passant par l'applicateur de colle, où $t_{CA1}$ est le temps d'assemblage le plus court possible pour le premier élément ou groupe d'éléments plus une marge de sécurité $S_1$ et $t_{CAN}$ est le temps d'assemblage le plus court possible pour le dernier élément ou groupe d'éléments, plus, éventuellement, une marge de sécurité $S_N$ qui est inférieure à $S_1$ ;
   b. si la colle doit être appliquée sur le premier élément ou au moins un élément du premier groupe d'éléments, à calculer la quantité d'au moins un composant de la colle pour le premier élément ou au moins un élément dudit premier groupe sur la base de $t_{CA1}$ et à appliquer cette quantité sur au moins une surface dudit premier élément ou dudit au moins un élément dudit premier groupe ;
   c. pour chaque élément i ou groupe i d'éléments passant simultanément par l'applicateur de colle, suivant, où i va de 2 à N-1 :

      (i) à calculer le temps d'assemblage $t_{CAi}$ par la formule

$$t_{CAi} = t_{CA1} - (t_{CA1} - t_{CAN})i/N \; ;$$

      et,
      (ii) si la colle doit être appliquée à l'élément ou au moins un élément du groupe d'éléments i, à calculer la quantité d'au moins un composant de la colle pour ledit élément ou au moins un élément dudit groupe i sur la base de $t_{CAi}$ et à appliquer cette quantité sur au moins une surface dudit élément ou dudit au moins un élément dudit groupe i ;
      et,

   d. si la colle doit être appliquée sur le dernier élément ou au moins un élément du dernier groupe d'éléments passant simultanément par l'applicateur de colle, à calculer la quantité d'au moins un composant de la colle pour le dernier élément ou au moins un élément dudit dernier groupe sur la base de $t_{CAN}$ et à appliquer cette quantité sur au moins une surface dudit dernier élément ou dudit au moins un élément dudit dernier groupe.

2. Procédé tel que revendiqué dans la revendication 1, dans lequel le produit composite est un produit stratifié en bois.

3. Procédé tel que revendiqué dans la revendication 2, dans lequel le produit stratifié en bois est une poutre lamellée.

4. Procédé tel que revendiqué dans la revendication 2, dans lequel le produit stratifié en bois est un contreplaqué.

5. Procédé tel que revendiqué dans l'une quelconque des revendications 1 à 4, dans lequel le nombre d'éléments dans le lot est compris entre 2 et 1000.

6. Procédé tel que revendiqué dans la revendication 5, dans lequel le nombre d'éléments dans un lot est compris entre 5 et 300.

7. Procédé tel que revendiqué dans l'une quelconque des revendications 1 à 6, dans lequel $t_{CA1}$ est compris entre environ 2 et environ 1100 minutes.

8. Procédé tel que revendiqué dans l'une quelconque des revendications 1 à 7, dans lequel $t_{CAN}$ est compris entre environ 1 et environ 350 minutes.

9. Procédé tel que revendiqué dans l'une quelconque des revendications 1 à 8, dans lequel la colle appliquée est une résine aminoplaste avec un durcisseur acide.

10. Procédé tel que revendiqué dans l'une quelconque des revendications 1 à 9, dans lequel tous les éléments passent par l'applicateur de colle un par un.

11. Procédé tel que revendiqué dans l'une quelconque des revendications 1 à 9, dans lequel des groupes de deux ou plusieurs éléments passent simultanément par l'applicateur de colle.

12. Appareil de fabrication d'un produit composite, ledit appareil comprenant un applicateur de colle, un transporteur pour faire passer des éléments ou des groupes d'éléments à travers l'applicateur de colle, un moyen pour compter le nombre d'éléments ou groupes d'éléments passant à travers l'applicateur de colle, une unité de régulation programmée pour réguler la quantité d'au moins un composant de la colle appliquée par l'applicateur de colle par le procédé selon l'une quelconque des revendications 1 à 11.

13. Produit de programme informatique qui, lorsqu'il est exécuté sur un ordinateur, régule la quantité d'au moins un composant de la colle appliquée à des éléments qui sont assemblés en les collant les uns aux autres sous pression selon l'une quelconque des revendications 1 à 11.

14. Support lisible par ordinateur comprenant des instructions pour amener un ordinateur à réguler la quantité d'au moins un composant de la colle appliquée à des éléments qui sont assemblés en les collant les uns aux autres sous pression selon l'une quelconque des revendications 1 à 11.

Fig.1

## REFERENCES CITED IN THE DESCRIPTION

**Patent documents cited in the description**

- WO 2001049489 A
- US 3582428 A
- EP 501174 A
- WO 93124582 A
- WO 9967028 A
- WO 2001070898 A
- WO 2009005461 A
- WO 02068178 A
- WO 99048991 A
- WO 2011009811 A
- WO 2011009812 A
- WO 2011141402 A